# EUROPÄISCHE PATENTSCHRIFT

(11) **EP 1 412 055 B1**
(45) Veröffentlichungstag und Bekanntmachung des Hinweises auf die Patenterteilung: **10.11.2004**
(21) Anmeldenummer: 02762363.6
(22) Anmeldetag: 17.07.2002
(51) Int. Cl.: B01D 53/14

(54) **VERFAHREN ZUR ENTFERNUNG VON GASBESTANDTEILEN AUS TECHNISCHEN GASEN MITTELS ETHYLENGLYKOLDIMETHYLETHERN BEI TIEFEREN TEMPERATUREN**
METHOD FOR THE SEPARATION OF GASEOUS COMPONENTS FROM TECHNICAL GASES BY MEANS OF ETHYLENE GLYCOL DIMETHYL ETHERS AT LOW TEMPERATURES
PROCEDE POUR EXTRAIRE DES ELEMENTS GAZEUX DE GAZ TECHNIQUES AU MOYEN DE DIMETHYLETHERS D'ETHYLENE GLYCOL A BASSES TEMPERATURES

(30) Priorität: 27.07.2001 DE 10136484
(43) Veröffentlichungstag der Anmeldung: 28.04.2004
(73) Patentinhaber: Uhde GmbH, 44141 Dortmund (DE)
(72) Erfinder: WYSCHOFSKY, Michael, 44135 Dortmund (DE); HOBERG, Dirk, 44265 Dortmund (DE)
(86) Internationale Anmeldenummer: PCT/EP2002/007915
(87) Internationale Veröffentlichungsnummer: WO 2003/011432

(56) Entgegenhaltungen:
- EP-A- 0 214 407
- EP-A- 0 770 420
- EP-A- 1 004 344
- DE-A- 2 028 423
- DE-A- 2 422 273
- DE-A- 2 437 576
- DE-A- 3 237 388
- DE-A- 3 501 120
- US-A- 3 533 732
- US-A- 4 526 594

## Beschreibung

Die Erfindung betrifft ein Verfahren zur Entfernung von Gasbestandteilen aus technischen Gasen wie z.B. Erdgas, Synthesegas und Prozessgasen, wobei die Gasbestandteile mittels einer bei tieferer Temperatur betriebenen Wäsche aus dem jeweiligen technischen Gas ausgewaschen werden und als Waschmittel Ethylenglykoldimethylether, im folgenden als EDGME bezeichnet, zum Einsatz kommen.

Die Aufgabe der Erfindung ist es, ein besonders bei großen Gasmengen wirtschaftliches Verfahren zur Entfernung von unerwünschten Gasbestandteilen, worunter H₂O, H₂S, CO₂, COS, HCN, CS₂, NH₃, Mercaptane, Thiophene, Carbonyle, Naphtalin, Paraffine (C3⁺) und organische Kohlenwasserstoffe zusammengefasst werden, die aber nicht alle gleichzeitig vorhanden sein müssen, aus technischen Gasen wie z.B. Erdgas, Synthesegas, etwa für die Herstellung von Methanol und Ammoniak, und Prozessgasen aus Kohle-, Öl- und Reststoffvergasung, zur Verfügung zu stellen.

Verfahren zur Entfernung von derartigen Gasbestandteilen aus technischen Gasen sind aus dem Stand der Technik bereits bekannt. So beschreibt z.B. die US 4,526,594 ein entsprechendes Verfahren, bei dem auch eine EDGME-Mischung mit 3 bis 10 Ethyleneinheiten Verwendung finden soll, wie es z.B. unter der Handelsbezeichnung "Selexol" üblicherweise erhältlich ist. Das dort beschriebene Verfahren ist zwischen -18 °C und 150 °C einsetzbar. Unterhalb von -18 °C würde sich die angegebene EDGME-Mischung jedoch verfestigen und wäre nicht mehr pumpbar. Eine Reihe weiterer Verfahren, wie sie z.B. in DE 24 37 576 A1, DE 20 28 423 A1 und US 3,533,732 beschrieben sind, setzen ebenfalls EDGME-Mischungen ein, wobei die Einsatztemperaturen jedoch höher liegen.

Die Erfindung löst die Aufgabe dadurch, dass die Gasbestandteile in einer Gaswäsche bei einer Temperatur von -20 °C bis -60 °C ausgewaschen werden, wobei als Waschmittel ein EDGME oder eine Mischung verschiedener EDGME zum Einsatz kommt, welches Waschmittel einen Festpunkt von unter -30 °C und eine Siedetemperatur bei Normaldruck von unter 275 °C besitzt und eine Molmasse kleiner als 230 g/mol aufweist, und das mit den Gasbestandteilen beladene Waschmittel nach der Gaswäsche in einem separaten Regenerationsverfahren von diesen Bestandteilen wieder befreit wird. Die Gasbestandteile werden dabei beim Waschvorgang im Waschmittel physikalisch gelöst bzw. absorbiert und gehen keine chemischen Verbindungen mit dem Waschmittel ein.

In einer Ausgestaltung des Verfahrens werden Mono-, Di-, Tri- und Tetra-EDGME oder Mischungen daraus eingesetzt. Bevorzugt werden Di- und Tri-EDGME oder Mischungen daraus mit einer mittleren Molmasse von 134 bis 178 g/mol eingesetzt.

In einer weiteren Ausgestaltung des Verfahrens findet die Auswaschung der Gasbestandteile bei einer Temperatur von -20 °C bis -40 °C statt.

Das Verfahren besitzt gegenüber anderen vergleichbaren Verfahren den Vorteil, dass nur geringe Waschmittelvolumina im Waschkreislauf gefördert werden müssen, was zu erheblichen Einsparungen bei der Dimensionierung von Pumpen und Leitungen führt, ferner auch zu geringerem Bedarf an elektrischer Leistung bei den eingesetzten Umwälzpumpen.

Gegenüber konventionellen Waschmitteln, die bei höheren Temperaturen eingesetzt werden, besitzt das erfindungsgemäße Waschmittel den Vorteil, dass die Apparatedurchmesser der entsprechenden Waschvorrichtungen besonders klein dimensioniert werden können und dass keine Vorkehrungen getroffen werden müssen, um während des Waschvorgangs verdampftes Waschmittel im Anschluss an den Waschvorgang in weiteren Verfahrensstufen aus dem gereinigten technischen Gas wieder abzuscheiden.

Aus diesen Gründen ist das erfindungsgemäße Verfahren besonders für Anlagen sehr großer Leistung geeignet, die auf diese Weise auch dann noch einsträngig ausgelegt werden können, wo sonst aufgrund der sonst erforderlichen Dimensionen eine mehrsträngige Auslegung erforderlich wäre.

Das Verfahren besitzt weiterhin den Vorteil, dass sehr hohe Reinheiten bis hin in den ppm-Bereich im gereinigten technischen Gas erreicht werden können.

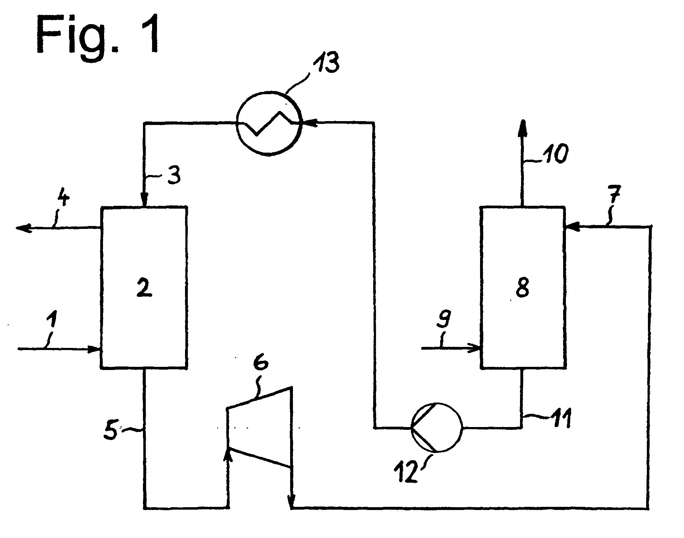

Das erfindungsgemäße Verfahren wird anhand von Fig. 1 in Verbindung mit einem gerechneten Beispiel in Tab. 1 näher erläutert, wobei stellvertretend für die große Zahl möglicher Ausführungsformen sowohl die Gaswäsche 2 als auch die Regeneration 8 lediglich als Blöcke dargestellt werden. Das verunreinigte technische Gas 1 wird dabei in der Gaswäsche 2 mit dem Waschmittel 3 beaufschlagt und gereinigt. Das gereinigte technische Gas 4 verlässt die Gaswäsche 2. Das beladene Waschmittel 5 wird aus der Gaswäsche 2 abgezogen und mittels der Entspannungsturbine 6 entspannt, wobei es sich abkühlt. Das entspannte Waschmittel wird in die Regeneration 8 geleitet, wo die in der Gaswäsche 2 abgeschiedenen Gasbestandteile aufgrund der Entspannung teilweise ausgasen und zum anderen Teil mit Strippgas 9, in diesem Beispiel Stickstoff, aus dem Waschmittel abgetrieben werden. Die ausgetriebenen Gasbestandteile werden zur weiteren Verwendung 10 abgeführt. Das von den Gasbestandteilen befreite Lösungsmittel 11 wird in der Druckerhöhung 12 wieder auf den Einsatzdruck verdichtet und im Kühler 13 auf die Einsatztemperatur nachgekühlt.

In Tab. 1 wird der Berechnung zugrundegelegt, dass ein EDGME mit einer Molmasse von 178 g/mol zum Einsatz kommt und als unerwünschter Gasbestandteil CO₂ entfernt werden soll.

| Nr. | Mengenstrom | Temperatur | Druck | CO₂-Gehalt |
|---|---|---|---|---|
| 1 | 21 400 kmol/h | -15 °C | 44,8 (bar_{abs}) | 17,6 mol-% |
| 4 | 16 750 kmol/h | -25 °C | 44,6 (bar_{abs}) | 500 vol.-ppm |
| 10 | 5 600 kmol/h | -24 °C | 1,5 (bar_{abs}) | 65 mol-% |
| 3 | 1150 m³/h | -25 °C | 46 (bar_{abs}) | - |
| 5 | 1300 m³/h | -18 °C | 44 (bar_{abs}) | 130 kg/m³ |

Für den Fall, dass weitere, kondensierbare Komponenten, die in der Gaswäsche 2 ausgewaschen wurden, in der Regeneration 8 vom Waschmittel wieder abgeschieden werden sollen, können diese auch ohne Wasserdampf als Strippmedium abdestilliert werden. Dies ist nur möglich, da die leichteren EDGME im Unterschied zu etablierten Waschmitteln destillierbar sind. Dies hat den Vorteil, dass im Anschluss an den Strippvorgang keinerlei eingetragenes Wasser, welches aus eingebrachtem Strippdampf resultieren würde, aus dem Waschmittel wieder entfernt werden muss, was auch ein weiterer Vorteil der Erfindung ist.

## Patentansprüche

1. Verfahren zur Entfernung von Gasbestandteilen aus technischen Gasen, wobei die Gasbestandteile mittels einer Gaswäsche aus dem technischen Gas ausgewaschen werden und das mit den Gasbestandteilen beladene Waschmittel nach der Gaswäsche in einem separaten Regenerationsverfahren von diesen Bestandteilen wieder befreit wird, wobei als Waschmittel ein Ethylenglykoldimethylether oder eine Mischung verschiedener Ethylenglykoldimethylether zum Einsatz kommt, welches Waschmittel einen Festpunkt von unter -30 °C und eine Siedetemperatur bei Normaldruck von unter 275 °C besitzt und eine Molmasse kleiner als 230 g/mol aufweist, **dadurch gekennzeichnet, dass** die Gasbestandteile in einer Gaswäsche bei einer Temperatur von -20 ° bis -60 °C ausgewaschen werden.

2. Verfahren nach Anspruch 1, **dadurch gekennzeichnet, dass** Mono-, Di-, Tri- und Tetra- Ethylenglykoldimethylether oder Mischungen daraus als Waschmittel eingesetzt werden.

3. Verfahren nach Anspruch 2, **dadurch gekennzeichnet, dass** Di- und Tri- Ethylenglykoldimethylether oder Mischungen daraus mit einer mittleren Molmasse von 134 bis 178 g/mol als Waschmittel eingesetzt werden.

4. Verfahren nach einem der vorangegangenen Ansprüche, **dadurch gekennzeichnet, dass** die Auswaschung der Gasbestandteile bei einer Temperatur von -20 °C bis -40 °C stattfindet.

## Claims

1. Process for removing gas components from technical gases, said components being scrubbed from the technical gases and the scrubbing agent laden with said components being purified in a separate regeneration unit after the scrubbing process, the scrubbing agent used being ethylene glycol dimethyl ether or a mixture of various EGDMEs, said scrubbing agent having a solidification point of < -30 C, a boiling point of <275 C at normal pressure and a molar mass of <230 g/mole,
**characterised in that** the gas components are being removed in a gas scrubbing process at a temperature of -20 to -60°C.

2. Process according to claim 1,
**characterised in that** the scrubber uses mono-, di-, tri- and tetra-ethylene glycol dimethyl ether or mixtures thereof as scrubbing agent.

3. Process according to claim 2,
**characterised in that** di- and tri-ethylene glycol dimethyl ether or mixtures thereof with an average molar mass of 134 to 178 g/mole are used as scrubbing agent.

4. Process according to one of the preceding claims,
**characterised in that** the scrubbing to remove the gas components takes place at a temperature of -20 °C to -40 °C.

## Revendications

1. Procédé pour la séparation de composants gazeux des gaz industriels, les dits composants étant séparés à l'aide d'un laveur de gaz et l'agent de lavage saturé des composants de gaz étant soumis à une purification dans une unité séparée de régénération disposée en aval du laveur de gaz, l'agent de lavage mis en oeuvre étant composé d'éther diméthylique d'éthylène glycol (EDMEG), le dit agent de lavage ayant un point de solidification de <-30°C, un point d'ébullition de <275°C à pression normale et une masse molaire de <230 g/mol.,
**caractérisé en ce que** les composants de gaz sont séparés dans un laveur de gaz à une température de -20°C à -60°C.

2. Procédé selon la revendication No. 1,
**caractérisé en ce que** de les éthers mono-/di-/tri- et tetraméthyliques d'éthylène glycol ou bien des mélanges de ceux-ci sont mis en oeuvre comme agent de lavage.

3. Procédé selon la revendication No. 2,
**caractérisé en ce que** les éthers di- ou triméthyliques d'éthylène glycol ou bien des mélanges de ceux-ci avec une masse molaire de 134 à 178 g/mol. sont mis en oeuvre comme agent de lavage.

4. Procédé selon une des revendications précédentes,
**caractérisé en ce que** la séparation des composants de gaz est effectuée à l'aide d'un lavage à une température de -20 à -40°C.
